# EUROPÄISCHE PATENTSCHRIFT

(11) **EP 2 226 656 B1**
(45) Veröffentlichungstag und Bekanntmachung des Hinweises auf die Patenterteilung: **23.10.2013**
(21) Anmeldenummer: 09003111.3
(22) Anmeldetag: 04.03.2009
(51) Int. Cl.: G01V 8/20

(54) **Optische Sensoranordnung und ASIC-Baustein zur Verwendung darin**
Optical sensor assembly and ASIC building block for use in same
Agencement de capteur optique et module ASIC destiné à son utilisation

(43) Veröffentlichungstag der Anmeldung: 08.09.2010
(73) Patentinhaber: SICK AG, 79183 Waldkirch/Breisgau (DE)
(72) Erfinder: Dreher, Felix, 79189 Bad Krozingen (DE); Zwölfer, Ulrich, 79341 Kenzingen (DE)
(74) Vertreter: Manitz, Finsterwald & Partner GbR

(56) Entgegenhaltungen:
- EP-A- 1 331 434
- WO-A-2008/138598
- US-A- 4 650 990
- US-A1- 2008 179 505

## Beschreibung

Die Erfindung betrifft eine optoelektronische Sensoranordnung mit einer Anzahl von L Lichtsendeelementen zum Aussenden von Lichtsignalen in einen Überwachungsbereich, wobei L ≥ 1 gilt, einer Ansteuereinheit zur Ansteuerung der Lichtsendeelemente über Ansteuer-Signalverbindungen, einer Anzahl von N Lichtempfängern zum Empfang der von den L Lichtsendeelementen ausgesendeten Lichtsignale, wobei N > 1 gilt, mit den Lichtempfängern verbundene Ausgangs-Signalverbindungen zur Ausgabe der Ausgangssignale der Lichtempfänger und einer Auswerteeinheit zur Erzeugung eines Objektfeststellungssignals in Abhängigkeit der Ausgangssignale der Lichtempfänger.

Derartige Sensoren werden beispielsweise als mehrstrahlige Lichtgittersysteme zur Zugangsüberwachung eingesetzt, wobei insbesondere gefährliche Maschinenarbeitsbereiche oder bestimmte Räume innerhalb eines Gebäudes abgesichert werden sollen. Wenn bei Sensoren der genannten Art ein Objekt in den Überwachungsbereich gelangt und damit den Lichtweg zwischen Lichtsender und Lichtempfänger unterbricht, wird ein Objektfeststellungssignal generiert, welches beispielsweise zum Abschalten einer Maschine oder zur Auslösung eines akustischen oder optischen Warnsignals genutzt werden kann. Während die Lichtsendeelemente in der Regel Leuchtdioden umfassen, werden die Lichtempfangselemente durch entsprechend ausgestaltete Fotodioden gebildet.

Dazu sind die Lichtempfänger über Ausgangs-Signalverbindungen mit einer Auswerteeinheit verbunden.

Für die Ausgangssignalstrecke werden heutzutage zum Beispiel ASICs (applikationsspezifische integrierte Schaltungen) eingesetzt, die ein Kommunikationsinterface, eine integrierte Empfangsdiode und einen Bandpassverstärker umfassen. Die Empfangsdiode ist dabei auf das entsprechende ASIC mit integriert. Für jeden Signalpfad von einer Empfangsdiode bis zur Auswerteeinheit ist ein eigenes ASIC vorgesehen.

Eine optoelektronische Sensoranordnung mit den Merkmalen des Oberbegriffes des Anspruchs 1 ist aus WO 2008/138 598 A1 bekannt.

Aufgabe der vorliegenden Erfindung ist es, eine optische Sensoranordnung anzugeben, die kostengünstiger und flexibler ist.

Diese Aufgabe wird mit einer optoelektronischen Sensoranordnung mit den Merkmalen des Anspruchs 1 bzw. einem ASIC-Baustein mit den Merkmalen des Anspruchs 16 gelöst.

Erfindungsgemäß ist insbesondere ein im vorliegenden Text als Empfangs-ASIC-Baustein bezeichneter ASIC-Baustein oder mehrere Empfangs-ASIC-Bausteine vorgesehen. In den Empfangs-ASIC-Baustein bzw. in die Empfangs-ASIC-Bausteine sind zumindest Teile der Ausgangs-Signalverbindungen integriert. Zusätzlich sind in den Empfangs-ASIC-Baustein bzw. in die Empfangs-ASIC-Bausteine Eingangsanschlüsse zum Anschluss der Lichtempfänger aufgenommen, wobei pro Empfangs-ASIC-Baustein p Eingangsanschlüsse vorgesehen sind (p ≥ 1). Außerdem weist jeder Empfangs-ASIC-Baustein q Ausgangsanschlüsse auf (q ≥ 1). Der wenigstens eine Empfangs-ASIC-Baustein bzw. die mehreren Empfangs-ASIC-Bausteine weisen jeweils eine Schalteinheit auf, mit der jeder der p Eingangsanschlüsse mit wenigstens einem der q Ausgangsanschlüsse verbunden werden kann. Die Summe der Anzahl der Empfangs-ASIC-Bausteine multipliziert mit der Anzahl p der jeweiligen Anzahl der Eingangsanschlüsse ist größer oder gleich der Anzahl N der Lichtempfänger.

Sind mehrere Empfangs-ASIC-Bausteine vorgesehen, sind die Ausgangs-Signalverbindungen der N Lichtempfangselemente auf die Empfangs-ASIC-Bausteine aufgeteilt, wobei jeweils wenigstens ein Teil der jeweiligen Ausgangs-Signalverbindung in dem ASIC integriert ist.

Der erfindungsgemäße Empfangs-ASIC-Baustein bzw. die erfindungsgemäßen Empfangs-ASIC-Bausteine umfassen also keine Lichtempfänger. Diese sind von außen mit dem ASIC-Baustein bzw. mit den ASIC-Bausteinen zu verschalten.

Die erfindungsgemäße Lösung spart also erheblich an teurer Chipfläche der jeweiligen ASIC-Bausteine. Außerdem ist es mit der erfindungsgemäßen Lösung einfach möglich, verschiedene Empfangselemente einzusetzen und der Anwendung entsprechend auf einfache Weise auszutauschen. Bei der Entwicklung der entsprechenden ASIC-Bausteine muss nur eine Geometrie berücksichtigt werden, da die möglicherweise unterschiedlichen Empfangsdioden nicht Teil des ASICs sind.

Durch die erfindungsgemäße Verwendung eines oder mehrerer Emfangs-ASIC-Bausteine mit einer Schalteinheit, mit der die Eingangsanschlüsse flexibel auf die Ausgangsanschlüsse des ASIC-Bausteines geschaltet werden können, ist eine hohe Flexibilität und Anpassungsfähigkeit an die Peripherie möglich.

Dabei ist die Schalteinheit vorteilhafterweise derart ausgestaltet, dass jeder der p Eingangsanschlüsse auf jeden der q Ausgangsanschlüsse geschaltet werden kann, so dass eine maximale Variabilität erreicht wird.

In dem wenigstens einen bzw. den mehreren Empfangs-ASIC-Bausteinen sind Teile der Ausgangs-Signalverbindungen enthalten. Von besonderem Vorteil ist es, dass zur Weiterleitung des Ausgangssignals eines von außen angeschlossenen Lichtempfängers an die Auswerteeinheit Verstärker vorgesehen sind, wobei je Lichtempfängeranschluss ein Verstärker vorgesehen ist.

Der Empfangs-ASIC-Baustein bzw. die mehreren Empfangs-ASIC-Bausteine umfassen vorteilhafterweise außerdem ein Konfigurationsinterface, durch das die in dem ASIC zusammengefassten Elemente von außen konfiguriert werden können.

Eine vorteilhafte Ausführungsform sieht vor, dass die Anzahl der Ausgangsanschlüsse kleiner oder gleich der Anzahl der Eingangsanschlüsse ist, so dass es insbesondere möglich ist, die dem Empfangs-ASIC-Baustein im Empfangskanal nachfolgenden Komponenten in geringerer Anzahl vorzusehen.

Bei einer vorteilhaften Weiterbildung mit mehreren Empfangs-ASIC-Bausteinen sind die einzelnen ASIC-Bausteine zu ihrer Ansteuerung und/oder Konfiguration nach Art einer Daisy-Chain mit einer Empfangskanalsteuereinheit verkettet. Dazu ist ein erster Empfangs-ASIC-Baustein direkt mit der Empfangssteuereinheit verbunden und die weiteren Empfangs-ASIC-Bausteine jeweils mit ihren Vorgängern, so dass eine Kette (Daisy-Chain) entsteht. Ein Steuersignal zu und von einem Empfangs-ASIC-Baustein geht nur über dessen Vorgänger bzw. über seine nachfolgenden Bausteine. Einfacherweise sind die Auswerteeinheit zur Auswertung der Empfangssignale und die Empfangskanalsteuereinheit zu einer gemeinsamen Auswerte- und Steuereinheit für die Empfangskanäle zu-sammenfasst. Es kann sich dabei zum Beispiel um einen entsprechend programmierten Mikroprozessor handeln.

Sind mehrere Auswerte-Signalverbindungen vorgesehen, können diese vorteilhafterweise zu einem Datenbus mit einer entsprechenden Anzahl (M) von Kanälen zusammengefasst werden, um die Ausgangssignale des wenigstens einen Empfangs-ASIC-Bausteins an die Auswerteeinheit weiterzuleiten. Eine vorteilhafte und einfache Ausgestaltung sieht dabei vor, dass die Anzahl der Kanäle im Datenbus der Anzahl der Ausgangsanschlüsse des wenigstens einen Empfangs-ASIC-Bausteins entspricht (M = q).

Bei einer Weiterbildung der optoelektronischen Sensoranordnung werden Mehrfachdioden eingesetzt, wobei die einzelnen Lichtempfänger Teile bzw. Segmente dieser Mehrfachdioden sind. Vorzugsweise kommen Doppeldioden oder 4-Quadrantendioden zum Einsatz, die eine ortsaufgelöste Messung noch höherer Genauigkeit ermöglichen.

Eine einfache Struktur sieht dabei vor, dass die Anzahl M von Auswerte-Signalverbindungen der Anzahl der Segmente der verwendeten Mehrfachdioden oder einem Vielfachen davon entspricht. Werden dementsprechend Doppeldioden eingesetzt, wird M = 2 oder M = 4 gewählt. Bei Einsatz von 4-Quadrantendioden wird M = 4 gewählt. Werden auf diese Weise mehrere Ausgangssignalverbindungen in einem ASIC zusammengefasst und werden z.B. 4-Quadrantenfotodioden eingesetzt, ermöglicht dies eine ortsauflösende Auswertung.

Eine weitere Verbesserung lässt sich erreichen, wenn auch die Ansteuer-signalverbindungen in einem oder mehreren ASIC-Bausteinen, im Folgenden als Sende-ASIC-Bausteine bezeichnet, vorgesehen sind. Mehrere Ansteuersignalverbindungen können sich dabei einen Sende-ASIC-Baustein teilen, so dass Chipfläche und Entwicklungskosten optimiert werden können.

Die Lichtsendeelemente werden zum Beispiel über eine oder mehrere Sendetreiberendstufen angesteuert. Dabei ist es zum Beispiel möglich, die Sendetreiberendstufen in die jeweiligen Sende-ASIC-Bausteine zu integrieren. Insbesondere kann zum Beispiel je Sende-ASIC-Baustein eine Sendetreiberendstufe vorgesehen sein. Besonders vorteilhaft ist es jedoch, wenn die Sendetreiberendstufe bzw. die Sendetreiberendstufen nicht in den jeweiligen Sende-ASIC-Baustein integriert sind. Auch außerhalb des Sende-ASIC-Bausteins können je Ausgangs-Signalverbindung eine Endstufe vorgesehen sein oder mehrere Ausgangs-Signalverbindungen über einen Schalter auf eine oder eine geringere Anzahl von Sendetreiberendstufen geschaltet werden. In dem Fall, dass die Anzahl der Sendetreiberendstufen nicht der Anzahl der Lichtsendeelemente entspricht, können die Lichtsendeelemente zum Beispiel sequentiell betrieben werden oder mehrere Endstufen parallel betrieben werden.

Wie beschrieben sind Ausgestaltungen, bei denen der Sende-ASIC-Baustein bzw. die Sende-ASIC-Bausteine die Lichtsendeelemente und/oder die gegebenenfalls vorhandenen Sendetreiberendstufen nicht umfassen, besonders flexibel und kostengünstig. Diese Elemente sind dann von außen an den Sende-ASIC-Baustein bzw. die Sende-ASIC-Bausteine anzuschließen. Eine solche Ausgestaltung verwirklicht einen konsequenten modularen Konzeptionsansatz. Die flächentreibenden und festgelegten Elemente wie Empfangselement, Sendetreiberendstufe (Sendetreibertransistor) und die Lichtsendeelemente werden außerhalb der ASIC-Bausteine verschaltet. Auf diese Weise ist außerdem ein hohes Maß an Flexibilität gegeben, mit dem sich an unterschiedliche Anforderungen des Marktes in Funktion und Preis angepasst werden kann.

Sind mehrere Sende-ASIC-Bausteine vorgesehen, können diese vorteilhaft ebenfalls nach Art einer Daisy-Chain mit einer Sendesteuereinheit verkettet sein, um Steuerbefehle und/oder Konfigurationsinformation zu erhalten.

Besonders einfach und günstig ist ein Aufbau, bei dem die Sendesteuereinheit für die Sende-ASIC-Bausteine, die Empfangskanalsteuereinheit für die Empfangs-ASIC-Bausteine und die Auswerteeinheit in eine gemeinsame Auswerte- und Steuereinheit integriert sind.

Eine ganz besonders bevorzugte Ausführungsform sieht vor, dass jeweils mindestens ein Empfangs-ASIC-Baustein und jeweils mindestens ein Sende-ASIC-Baustein derart in einen Kombinations-ASIC-Baustein integriert sind, dass der Kombinations-ASIC-Baustein sowohl als Empfangs-ASIC-Baustein als auch als Sende-ASIC-Baustein nutzbar ist. Dies ermöglicht zum Beispiel eine Ausführungsform, bei der zumindest Teile der Struktur des wenigstens einen Kombinations-ASIC-Bausteins sowohl für die Ausgabe-Signalverbindung als auch für die Ansteuer-Signalverbindung nutzbar sind. Viele Komponenten der Ausgabe-Signalverbindungen und der Ansteuer-Signalverbindungen besitzen auf Sender- bzw. Empfängerseite ähnliche Konfigurationsinterface-Strukturen, da in beiden Fällen die Kette der Sende- bzw. Empfangskanäle der optischen Sensoranordnung im Betrieb auf die gleiche Weise durchgetaktet werden müssen. Eine solche besonders bevorzugte Ausführungsform ermöglicht es, dass diese Funktionalität nur einmal entwickelt werden muss und für die Sende- und Empfangsseite gleichermaßen genutzt werden kann. Insbesondere können das Konfigurationsinterface sowie große Teile der Signalpfade als Sende- bzw. Empfangspfad benutzt werden und sind daher in einem entsprechenden Kombinations-ASIC-Baustein nur einmal notwendig. Ein solcher Kombinations-ASIC-Baustein bildet dann sowohl den Empfangs-ASIC-Baustein als auch den Sende-ASIC-Baustein.

Auf diese Weise lässt sich ein nur einmal entwickelter Kombinations-ASIC-Baustein sowohl auf der Sendeseite der optischen Sensoranordnung z.B. eines Lichtgitters als auch auf der Empfangsseite verwenden. Damit reduziert sich die Anzahl der notwendigen ASIC-Bausteine.

Dabei kann eine gemeinsame Auswerte- und Steuereinheit derart konfiguriert sein, dass der wenigstens eine Kombination-ASIC-Baustein gleichzeitig oder alternativ als Empfangs-ASIC-Baustein und Sende-ASIC-Baustein ansteuerbar ist.

Unabhängiger Schutz wird beansprucht für einen ASIC-Baustein, der ausgestaltet ist, um einen Empfangs-ASIC-Baustein einer erfindungsgemäßen optoelektronischen Sensoranordnung zu bilden. Ebenfalls wird unabhängiger Schutz beansprucht für einen ASIC-Baustein, der als Sende-ASIC-Baustein einer entsprechenden Ausführungsform der erfindungsgemäßen optoelektronischen Sensoranordnung eingesetzt werden kann. Schließlich wird auch ein ASIC-Baustein unabhängig beansprucht, der als Kombinations-ASIC-Baustein einer entsprechenden Ausführungsform einer erfindungsgemäßen optoelektronischen Sensoranordnung eingesetzt werden kann.

Besonders vorteilhaft lässt sich die Erfindung bei Lichtgittern einsetzen, bei denen auf einer Seite des Überwachungsbereiches eine Anzahl von Lichtsendeelementen vorgesehen ist und auf der anderen Seite des Überwachungsbereiches eine entsprechende Anzahl von Lichtempfangselementen. Ebenso ist die Erfindung bei Lichtgittersystemen vorteilhaft einsetzbar, bei denen sich Sende- und Empfangselemente auf einer Seite des Überwachungsbereiches befinden und auf der anderen Seite gegebenenfalls ein reflektierendes oder remittierendes Begrenzungselement. Schließlich ist ein Einsatz auch möglich, wenn sich Sende- und Empfangselemente auf einer Seite des Überwachungsbereiches befinden und die Reflexion oder Remission eines Objektes im Überwachungsbereich detektiert wird.

Auch der Einsatz mit so genannten tastenden Lichtgittern ist vorteilhaft, bei denen mit Hilfe der einzelnen Sende-Empfangseinheiten zusätzlich eine Laufzeitmessung zur Entfernungsbestimmung oder Vermessung eines Objektes durchgeführt wird.

Im Folgenden wird die Erfindung anhand schematischer Darstellungen erläutert, die erfindungsgemäße Ausführungsformen zeigen. Dabei zeigen
- Fig. 1: den Aufbau einer Empfangseinheit einer Ausführungsform einer erfindungsgemäßen optoelektronischen Sensoranordnung,
- Fig. 2: eine Schaltgeometrie einer Empfangseinheit einer Ausführungsform einer erfindungsgemäßen optoelektronischen Sensoranordnung,
- Fig. 3: eine andere Verschaltung einer Empfangseinheit einer Ausführungsform einer erfindungsgemäßen optoelektronischen Sensoranordnung,
- Fig. 4: eine weitere andere Verschaltung einer Empfangseinheit einer Ausführungsform einer erfindungsgemäßen optoelektronischen Sensoranordnung,
- Fig. 5: eine Schalteinheit einer Empfangseinheit einer anderen Ausführungsform einer erfindungsgemäßen optoelektronischen Sensoranordnung,
- Fig. 6: eine Schalteinheit einer Empfangseinheit einer weiteren Ausführungsform einer erfindungsgemäßen optoelektronischen Sensoranordnung,
- Fig. 7: den Aufbau einer Sendeeinheit einer Ausführungsform einer erfindungsgemäßen optoelektronischen Sensor-anordnung, und
- Fig. 8: den Aufbau eines Beispiels für eine Lichtgittereinheit.

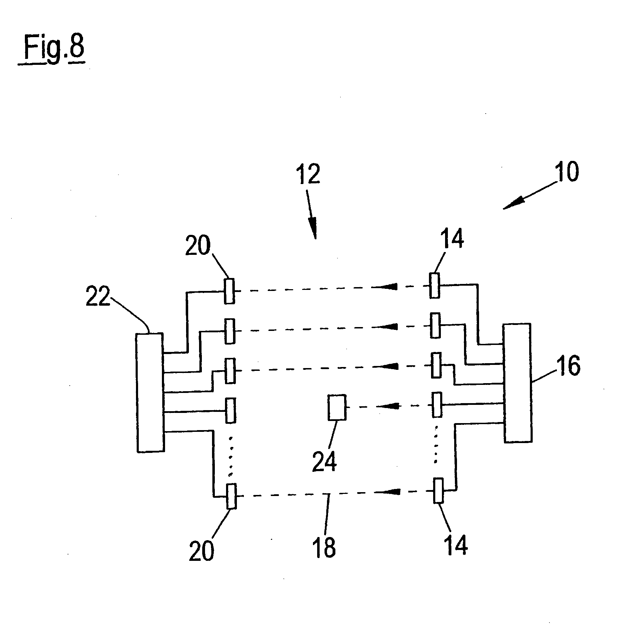

Der grundsätzliche Aufbau einer beispielhaften Lichtgittereinheit 10 ist in Fig. 8 gezeigt. Es dient der Überwachung eines Überwachungsbereiches 12 auf die Anwesenheit von Objekten. Zum Beispiel wird ein solches Lichtgitter in an sich bekannter Weise eingesetzt, um den Gefahrenbereich einer Maschine, zum Beispiel einer Presse oder Stanzpresse, abzusichern, um ein Warnsignal oder ein Stoppsignal zu erzeugen, wenn sich zum Beispiel ein Körperteil eines Bedieners im Überwachungsbereich befindet.

Bezugsziffern 14 bezeichnen Lichtquellen, in der Regel Leuchtdioden, die in einer Reihe angeordnet sind und von einer Ansteuereinheit 16 angesteuert werden. Auf der anderen Seite des Überwachungsbereiches 12 befinden sich Empfangselemente 20, z.B. entsprechende Fotodioden. Die Fotodioden 20 werden von einer Auswerteeinheit 22 ausgelesen und ausgewertet. Befindet sich ein Objekt 24 im Überwachungsbereich 12, so werden die Lichtstrahlen 18 an diesem Objekt blockiert, so dass an dem entsprechenden Empfangselement 20 kein Signal ankommt. Die Auswerteeinheit 22 erzeugt daraufhin z.B. ein Warn- oder Stoppsignal.

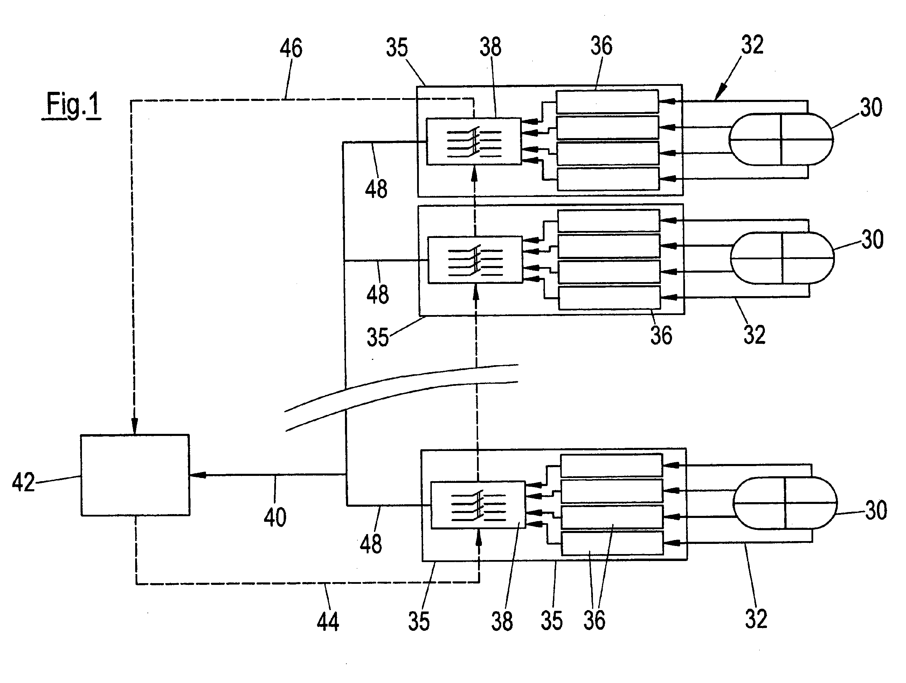

Fig. 1 zeigt den schematischen Aufbau der Empfangsseite einer erfindungsgemäßen optischen Sensorelementanordnung. Gezeigt sind beispielhaft mehrere 4-Quadrantendioden 30, die als Empfangselemente eingesetzt werden. Tatsächliche Ausgestaltungen umfassen eine sehr viel höhere Anzahl von Empfangsdioden in einer Reihe. Die einzelnen Segmente der 4-Quadrantendioden 30 geben ihre Signale an Ausgangs-Signalverbindungen 32 aus, von denen nur einige mit einer entsprechenden Bezugsziffer versehen sind. Die entsprechenden Kanäle führen zu den ASIC-Bausteinen 35, die in noch zu beschreibender Weise verschiedene Funktionen miteinander vereinigen. So sind in den ASIC-Bausteinen für die einzelnen Ausgangs-Signalverbindungen Verstärkerelemente 36 vorgesehen. Die Ausgänge dieser Verstärkerelemente werden jeweils an eine Schalteinheit 38 gegeben, die hier jeweils vier Ausgangs-Signalverbindungen kombiniert, die zu den Segmenten einer 4-Quadrantendiode 30 gehören. Die Ausgänge der Schalteinheiten 38 führen auf einen vierkanaligen Datenbus 48, 40, der zu einer Auswerteeinheit 42 führt. Bei der vorliegenden Ausführungsform liegen also vier (M=4) Ausgangs-Signalverbindungen vor, die durch die vier Kanäle des Datenbusses 40, 48 gebildet werden. Die einzelnen Schalter 38 der Empfangs-ASIC-Bausteine 35 sind über eine Steuerleitung 44, 46 mit der Auswerte- und Steuereinheit 42 verbunden, die zum Beispiel durch einen Mikroprozessor gebildet sein kann.

Die Schalteinheiten 38 sind dabei mit diesen Steuerleitungen nach Art einer "Daisy-Chain" verbunden. Dabei ist nur die erste Schalteinheit 38 mit der Auswerte- und Steuereinheit 42 verbunden und die folgenden Schalteinheiten 38 nur über die vorhergehenden Schalteinheiten 38. Die letzte Schalteinheit 38 (in Fig. 1 oben) ist wiederum mit der Auswerte- und Steuereinheit 42 über die Verbindung 46 verbunden. Die anderen Schalteinheiten können mit der Auswerte- und Steuereinheit 42 insofern nur über die äußeren Auswerte- und Steuereinheiten kommunizieren. In einer solchen Struktur ist es zum Beispiel auf einfache Weise möglich, Prioritäten bei der Bearbeitung zu setzen etc.

Mit Hilfe einer derartigen Steuerung ist es auf einfache Weise möglich, eine Geometrie zu realisieren, bei der die Signale jeder einzelnen Ausgangs-Signalverbindung 32 flexibel auf die Ausgangsanschlüsse verschaltet werden.

Im in Fig. 1 dargestellten Beispiel umfasst jeder einzelne Empfangs-ASIC-Baustein 35 vier Eingangsanschlüsse (p = 4) und vier Empfangs-ASIC-Ausgänge (q = 4), die über den vierkanaligen Datenbus 48, 40 (M = 4) weitergeleitet werden.

Dabei ist die Verschaltung zum Beispiel derart vorgesehen, dass aus einer Schalteinheit 38 immer eine erste Ausgangs-Signalverbindung auf den ersten Kanal des vierkanaligen Datenbusses 40 geschaltet werden kann, das Signal der zweiten Ausgangs-Signalverbindung auf den zweiten Kanal des Datenbusses 40 gegeben werden kann, das Signal der dritten Ausgangs-Signalverbindung auf den dritten Kanal des vierkanaligen Datenbusses 40 gegeben werden kann und das Signal der vierten Ausgangs-Signalverbindung auf den vierten Kanal des vierkanaligen Datenbusses 40 gegeben werden kann. Welche und wieviele der vier Ausgangs-Signalverbindungen, die zu einer 4-Quadrantenfotodiode 30 gehören, gerade auf Durchgang geschaltet ist, wird mit Hilfe der Schalteinheiten 38 festgelegt.

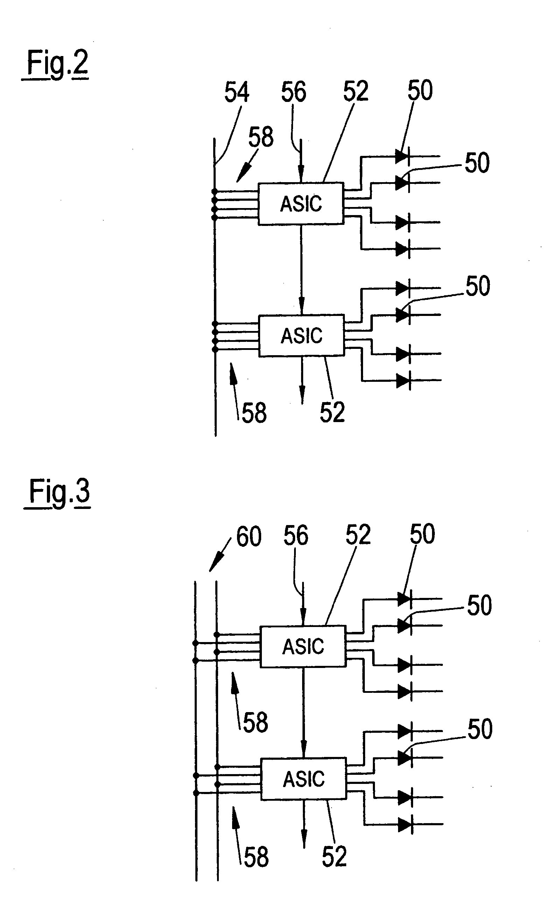

Fig. 2 bis 4 zeigen typische Verschaltungen. Auch hier ist jeweils wieder die Empfangsseite eines Lichtgitters gezeigt. Es umfasst Fotodioden 50, die die Empfänger des Lichtgitters bilden. Die Ausgangs-Signalleitungen dieser Fotodioden 50 werden in ASIC-Bausteine 52 eingespeist. Diese ASIC-Bausteine 52 können z.B. aufgebaut sein, wie der ASIC-Baustein 35, der mit Bezug zu Fig. 1 beschrieben ist. Angesteuert werden die ASIC-Bausteine 52 über eine Steuerleitung 56 einer Daisy-Chain-Anordnung, die z.B. die Schalteinheiten in dem ASIC-Baustein betätigt. Die Ausgänge der ASIC-Bausteine sind mit der Bezugsziffer 58 bezeichnet.

Fig. 2 zeigt dabei eine Ausgestaltung, bei der alle Ausgänge 58 des ASIC-Bausteines in denselben einkanaligen analogen Datenbus 54 münden, so dass nur eine Fotodiode 50 gleichzeitig auswertbar ist. Mit Hilfe der Daisy-Chain-Steuerleitung 56 werden insofern z.B. die Schalteinheiten der ASIC-Bausteine 52 der Reihe nach durchgeschaltet, so dass die Signale der Fotodioden 50 sequentiell ausgelesen werden.

Fig. 3 zeigt eine andere Verschaltung, bei der ein zweikanaliger Analogbus 60 zum Einsatz kommt. Zum Beispiel werden die erste und dritte Fotodiode einer Vierergruppe auf den ersten Kanal des zweikanaligen Datenbusses 60 geschaltet und die zweite und vierte Fotodiode 50 auf den zweiten Kanal der zweikanaligen Datenbusleitung 60 geschaltet. Welcher der Kanäle gerade aktiv ist, wird mit Hilfe der Daisy-Chain-Steuerleitung 56 über die Stellung des Schalters 38 des jeweiligen ASICs eingestellt.

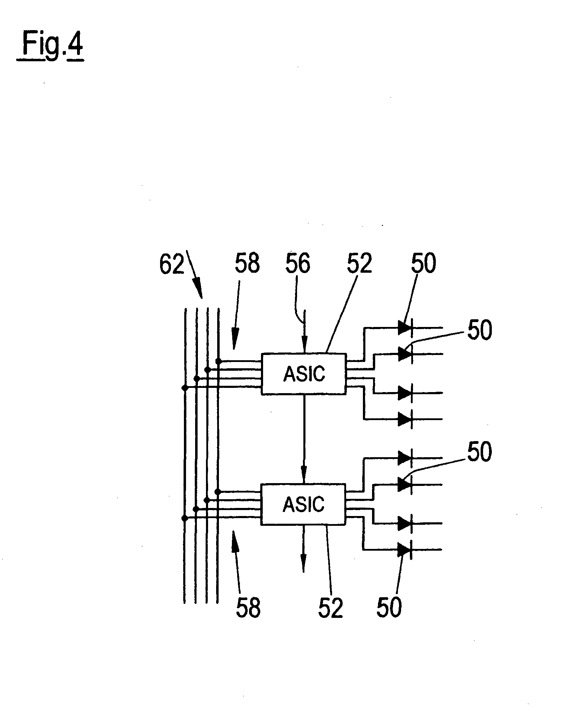

Fig. 4 zeigt eine dritte Verschaltung, bei der ein vierkanaliger analoger Datenbus 62 zum Einsatz kommt. Hier wird mit Hilfe der Steuerleitung 56 von jeder Vierergruppe mit Hilfe der Schalteinheit der ASICs 52 eine Fotodiode 50 mit einem Kanal des vierkanaligen Datenbusses 62 verbunden. So können z.B. immer die vier Fotodioden 50 einer durch ein ASIC zusammengefassten Gruppe gleichzeitig ausgelesen werden. Zum Beispiel können die vier Fotodioden 50 einer durch ein ASIC zusammengefassten Gruppe 52 vorteilhafterweise durch eine 4-Quadrantenfotodiode gebildet werden, so dass eine zumindest in Grenzen ortsaufgelöste Messung möglich ist.

Insbesondere mit Bezug zu den Fig. 2 bis 4 zeigt sich ein besonderer Vorteil des erfindungsgemäßen Aufbaus, da die einzelnen ASIC-Bausteine 52 für die Ausgestaltungen aller Fig. 2 bis 4 gleich sein können und nur mit Hilfe der durch die Daisy-Chain-Steuerleitung 56 veranlassten Schalterstellung an das Vorhandensein eines einkanaligen Datenbusses 54, eines zweikanaligen Datenbusses 60 oder eines vierkanaligen Datenbusses 62 angepasst werden können. Eine Entwicklung von unterschiedlichen ASIC-Bausteinen für diese unterschiedlichen Anwendungen ist also nicht notwendig. Ein weiterer Vorteil der gezeigten Ausführungsform liegt darin, dass die Fotodioden 50 nicht in die ASIC-Bausteine 52 integriert sind und insofern die ASICs sehr flexibel eingesetzt werden können und geringer dimensioniert sind. Zudem ist es möglich, unterschiedliche Ausgangsbusgeometrien einzusetzen.

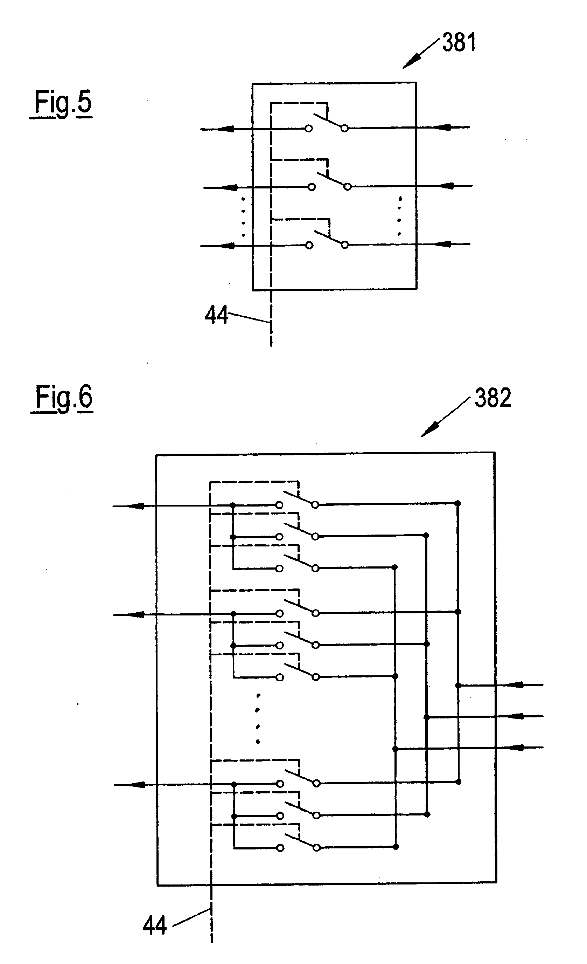

Mögliche abgewandelte Geometrien von Schalteinheiten 381, 382 sind Gegenstand der Fig. 5 und 6. In gestrichelter Form sind die Daisy-Chain-Steuerleitungen 44 gezeigt, mit deren Hilfe die einzelnen Schalter in den Schalteinheiten 381, 382 geschaltet werden können. Eine einfache Geometrie ist dabei in Fig. 5 gezeigt, bei der über die Daisy-Chain-Steuerleitung 44 festgelegt werden kann, welche der p (hier 3) Eingänge mit einem jeweiligen Ausgang der q (hier 3) ASIC-Ausgänge verbunden werden können.

Auch in Fig. 6 ist eine Geometrie gezeigt, bei der p = q = 3 gilt, wobei hier höchst flexibel festgelegt werden kann, welche Eingänge mit welchen Ausgängen verbunden werden können.

Die mit Bezug zu den Fig. 1 bis 6 erläuterten ASIC-Bausteine 35, 52 bilden Empfangs-ASIC-Bausteine.

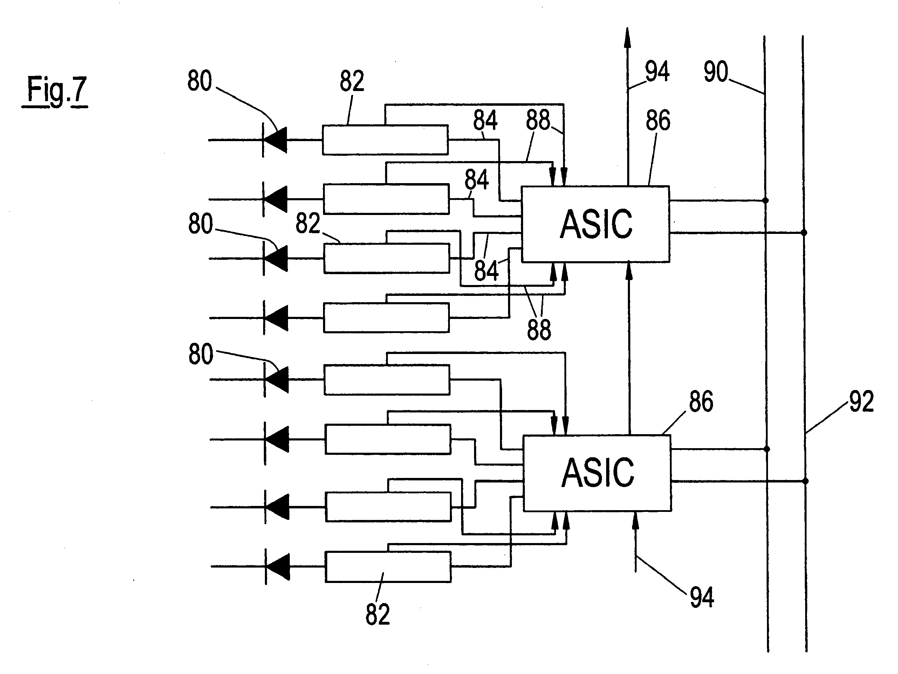

Fig. 7 zeigt schematisch die Sendeseite einer Ausführungsform einer erfindungsgemäßen optoelektronischen Sensoranordnung. Sendeleuchtdioden 80 sind in einer Reihe angeordnet, um die Sendeseite eines Lichtgitters zu bilden. Mit jeder Sendeleuchtdiode 80 ist bei dieser Ausführungsform eine einen Sendetreibertransistor umfassende Sendetreiberendstufe 82 verbunden, die über Steuerleitungen 84 mit einem der ASIC-Bausteine 86 verbunden sind und über diese Steuerleitungen 84 Befehle von dem jeweiligen ASIC-Baustein 86 zur Ansteuerung erhalten. Der Status der Sendetreibertransistoren kann über die Statusleitung 88 an das ASIC zurückgemeldet werden. Die ASIC-Bausteine 86 erhalten Steuerbefehle und Konfigurationseinstellungen über eine Daisy-Chain-Steuerleitung 94, zum Beispiel von einer hier nicht dargestellten Steuereinheit. Eingänge der ASIC-Bausteine 86 sind außerdem einerseits mit einem pulsübermittelnden Datenbus 90 verbunden. Eine analoge Verbindung 92 dient andererseits gegebenenfalls der Zurverfügungstellung eines analogen Steuersignals.

Abweichend von der gezeigten Ausführungsform kann auch eine kleinere Anzahl von Sendetreibertransistoren 82 vorgesehen sein, die über entsprechende Schalter mit den ASIC-Bausteinen 86 bzw. den Lichtsendeelementen 80 verbunden sind. Außerdem sind Ausführungsformen möglich, bei denen die Sendetreibertransistoren durch insbesondere lastfrei betätigte Schalter ersetzt sind, die den eigentlichen Puls von einer zentralen Ansteuerung bekommen.

An der beschriebenen Sendeeinheit eines Lichtgitters zeigt sich ebenfalls der besondere Vorteil, dass die flächentreibenden Elemente wie die Leuchtdioden 80 und die Sendetreibertransistoren 82 nicht in den Sende-ASIC-Baustein 86 integriert sind. Wenn gegebenenfalls vorgesehene Sendetreibertransistoren nicht in die Sende-ASIC-Bauteine 86 integriert sind, können die ASICs so außerdem mit unterschiedlichen Sendetreibertransistoren verwendet werden, so dass der Entwicklungsaufwand minimiert ist.

Die ASICs 35, 52 eines empfangsseitigen Teils einer optoelektronischen Sensoranordnung und die ASICs 86 des sendeseitigen Teils können untereinander gleich sein, da viele Strukturen in den ASICs 35, 52, 86 identisch sind, z.B. das Konfigurationsinterface und große Teile der Signalpfade.

Der modulare Aufbau erweist sich dementsprechend als besonders kostengünstig und flexibel. Zum einen ist es bei den gezeigten Ausführungsformen möglich, nur ein ASIC-Bausteindesign sowohl auf der Empfangsseite als auch auf der Sendeseite eines Lichtgitters einzusetzen.

Die ASIC-Bausteine weisen außerdem nicht die flächentreibenden und individuellen Elemente wie die Leuchtdioden 80, die Empfangsdioden 50 oder die Sendetreibertransistoren 82 auf.

Ein einziges ASIC-Bausteindesign ist dementsprechend für unterschiedlichste Anwendungen einsetzbar.

### Bezugszeichenliste

- 10: Lichtgitter
- 12: Überwachungsbereich
- 14: Sendeleuchtdiode
- 16: Ansteuereinheit
- 18: Lichtstrahl
- 20: Empfangsdiode
- 22: Auswerteeinheit
- 24: Objekt
- 30: 4-Quadrantendiode
- 32: Ausgangs-Signalverbindung
- 35: Empfangs-ASIC-Baustein
- 36: Verstärker
- 38, 381, 382: Schalteinheit
- 40: vierkanaliger Datenbus
- 42: Auswerte- und Steuereinheit
- 44, 46: Steuerleitung
- 48: Datenbus
- 50: Empfangsdiode
- 52: Empfangs-ASIC-Baustein
- 54: einkanaliger Datenbus
- 56: Daisy-Chain-Steuerleitung
- 58: ASIC-Ausgang
- 60: zweikanaliger Datenbus
- 62: vierkanaliger Datenbus
- 80: Sendeleuchtdiode
- 82: Sendetreibertransistor
- 84: Steuerleitung
- 86: Sende-ASIC-Baustein

- 88: Statusleitung
- 90: Pulsdatenbus
- 92: analoge Steuerleitung
- 94: Daisy-Chain-Steuerleitung

## Patentansprüche

1. Optoelektronische Sensoranordnung mit
- einer Anzahl von L Lichtsendeelementen (14, 80) zum Aussenden von Lichtsignalen (18) in einen Überwachungsbereich, wobei L ≥ 1 gilt,
- einer Ansteuereinheit (16) zur Ansteuerung der Lichtsendeelemente (14, 80) über Ansteuer-Signalverbindungen,
- einer Anzahl von N Lichtempfängern (20, 30, 50) zum Empfang der von den L Lichtsendeelementen (14, 80) ausgesendeten Lichtsignale, wobei N > 1 gilt,
- mit den Lichtempfängern verbundene Ausgangs-Signalverbindungen (32) zur Ausgabe der Ausgangssignale der Lichtempfänger, und
- einer Auswerteeinheit (22, 42) zur Erzeugung eines Objektfeststellungssignals in Abhängigkeit der Ausgangssignale der Lichtempfänger (20, 30, 50),
**gekennzeichnet durch**
wenigstens einen Empfangs-ASIC-Baustein (35, 52), dessen Ausgangsanschlüsse mit wenigstens einem analogen Datenbus verkoppelt sind und in den zumindest Teile der Ausgangs-Signalverbindungen (32) integriert sind und der p Eingangsanschlüsse zum Anschluss von Lichtempfängern (30) und q Ausgangsanschlüsse umfasst, wobei "p > 1 und q > 1" oder "p = 1 und q > 1" oder "p > 1 und q = 1" gilt, und
wobei der wenigstens eine Empfangs-ASIC-Baustein (35, 52) über eine Schalteinheit (38) verfügt, mit der jeder der p Eingangsanschlüsse mit wenigstens einem der q Ausgangsanschlüsse verbunden werden kann, und wobei die Summe der Produkte der Anzahl der Empfangs-ASIC-Bausteine mit der jeweiligen Anzahl p der Eingangsanschlüsse größer oder gleich N ist, und wobei die p Eingangsanschlüsse des wenigstens einen Empfangs-ASIC-Bausteins (35, 52) über auf dem wenigstens einen Empfangs-ASIC-Baustein (35, 52) integrierte Verstärker (36) verfügen, die vor der Schalteinheit (38) angeordnet sind.

2. Optoelektronische Sensoranordnung nach Anspruch 1, **dadurch gekennzeichnet, dass** die Schalteinheit (38) derart ausgestaltet ist, dass jeder der p Eingangsanschlüsse auf jeden der q Ausgangsanschlüsse geschaltet werden kann.

3. Optoelektronische Sensoranordnung nach einem der Ansprüche 1 oder 2, **dadurch gekennzeichnet, dass** mehrere Empfangs-ASIC-Bausteine (35, 52) vorgesehen sind, die zu ihrer Ansteuerung mit einer Empfangskanalsteuereinheit (42), vorzugsweise nach Art einer Daisy-Chain, verkettet sind.

4. Optoelektronische Sensoranordnung nach Anspruch 3, **dadurch gekennzeichnet, dass** die Auswerteeinheit und die Empfangskanalsteuereinheit eine gemeinsame Auswerte- und Steuereinheit (42) bilden.

5. Optoelektronische Sensoranordnung nach einem der Ansprüche 1 bis 4, **dadurch gekennzeichnet, dass** eine Anzahl M von, vorzugsweise zu einem M-kanaligen Datenbus (48) zusammengefassten, Auswerte-Signalverbindungen vorgesehen ist, die den wenigstens einen Empfangs-ASIC-Baustein (35, 52) zur Übermittlung der Ausgangssignale der Lichtempfangseinheiten (30, 50) mit der Auswerteeinheit (42) verbinden.

6. Optoelektronische Sensoranordnung nach einem der Ansprüche 1 bis 5, **dadurch gekennzeichnet, dass** die einzelnen Lichtempfänger Teile von Mehrfachdioden, vorzugsweise von Doppeldioden oder 4-Quadrantendioden (30), sind.

7. Optoelektronische Sensoranordnung nach einem der Ansprüche 1 bis 6, **dadurch gekennzeichnet, dass** die Auswerteeinheit (42) nicht in den wenigstens einen Empfangs-ASIC-Baustein (35, 52) integriert ist.

8. Optoelektronische Sensoranordnung nach einem der Ansprüche 1 bis 7, **dadurch gekennzeichnet, dass** Teile der Ansteuer-Signalverbindungen in einem oder mehreren Sende-ASIC-Bausteinen (86) vorgesehen sind, wobei sich vorzugsweise mehrere Ansteuer-Signalverbindungen einen Sende-ASIC-Baustein (86) teilen.

9. Optoelektronische Sensoranordnung nach Anspruch 8, **dadurch gekennzeichnet, dass** die Lichtsendeelemente (80) nicht in den einen Sende-ASIC-Baustein beziehungsweise die mehreren Sende-ASIC-Bausteine (86) integriert sind.

10. Optoelektronische Sensoranordnung nach einem der Ansprüche 8 oder 9, **gekennzeichnet durch** wenigstens eine Sendetreiberendstufe, vorzugsweise L Sendetreiberendstufen (82), zur Ansteuerung der Lichtsendeelemente (80), wobei die wenigstens eine Sendetreiberendstufe (82) nicht in dem Sende-ASIC-Baustein (86) integriert ist.

11. Optoelektronische Sensoranordnung nach einem der Ansprüche 8 bis 10, **dadurch gekennzeichnet, dass** mehrere Sende-ASIC-Bausteine (86) vorgesehen sind, die zu ihrer Ansteuerung mit einer Sendesteuereinheit, vorzugsweise nach Art einer Daisy-Chain, verkettet sind.

12. Optoelektronische Sensoranordnung nach Anspruch 11, insoweit er direkt oder indirekt von Anspruch 4 abhängig ist, **dadurch gekennzeichnet, dass** die Sendesteuereinheit in die gemeinsame Auswerte- und Steuereinheit (42) integriert ist.

13. Optoelektronische Sensoranordnung nach einem der Ansprüche 8 bis 12, **dadurch gekennzeichnet, dass** jeweils wenigstens ein Empfangs-ASIC-Baustein und jeweils wenigstens ein Sende-ASIC-Baustein derart in einen Kombinations-ASIC-Baustein integriert sind, dass der Kombinations-ASIC-Baustein sowohl als Empfangs-ASIC-Baustein als auch als Sende-ASIC-Baustein nutzbar ist.

14. Optoelektronische Sensoranordnung nach Anspruch 13, **dadurch gekennzeichnet, dass** Teile der Struktur des wenigstens einen Kombinations-ASIC-Bausteines, insbesondere ein Konfigurationsinterface, sowohl für die Ausgabe-Signalverbindung als auch für die Ansteuer-Signalverbindung nutzbar sind.

15. Optoelektronische Sensoranordnung nach Anspruch 12 und einem der Ansprüche 13 oder 14, **dadurch gekennzeichnet, dass** die gemeinsame Auswerte- und Steuereinheit (42) derart konfiguriert ist, dass der wenigstens eine Kombinations-ASIC-Baustein gleichzeitig oder alternativ als Empfangs-ASIC-Baustein und Sende-ASIC-Baustein ansteuerbar ist.

16. Verwendung eines ASIC-Bausteins als Empfangs-ASIC-Baustein (35, 52) in einer optoelektronischen Sensoranordnung gemäß einem der Ansprüche 1 bis 7 oder als Sende-ASIC-Baustein (86) in einer optoelektronischen Sensoranordnung gemäß einem der Ansprüche 8 bis 12 oder als Kombinations-ASIC-Baustein zur Verwendung in einer optoelektronischen Sensoranordnung gemäß einem der Ansprüche 13 bis 15.

## Claims

1. An optoelectronic sensor arrangement comprising
- a number of L light transmission elements (14, 80) for transmitting light signals (18) into a monitored zone, where L ≥ 1 applies;
- a control unit (16) for controlling the light transmission elements (14, 80) via control signal connections;
- a number of N light receivers (20, 30, 50) for receiving the light signals transmitted by the L light transmission elements (14, 80), where N > 1 applies;
- output signal connections (32) connected to the light receivers for outputting the output signals of the light receivers; and
- an evaluation unit (22, 42) for generating an object determination signal in dependence on the output signals of the light receivers (20, 30, 50),
**characterised by**
at least one ASIC reception module (35, 52) whose output terminals are coupled to at least one analogue databus and in which at least some of the output signal connections (32) are integrated and which comprises p input terminals for connecting light receivers (30) and q output terminals, where "p > 1 and q > 1" or "p = 1 and q > 1" or "p > 1 and q = 1", and
wherein the at least one ASIC reception module (35, 52) has a switching unit (38) by which each of the p input terminals can be connected to at least one of the q output terminals, and wherein the sum of the products of the number of the ASIC reception modules with the respective number p of input terminals is larger than or equal to N, and wherein the p input terminals of the at least one ASIC reception module (35, 52) have amplifiers (36) which are integrated on the at least one ASIC reception module (35, 52) and are arranged in front of the switching unit (38).

2. An optoelectronic sensor arrangement in accordance with claim 1, **characterised in that** the switching unit (38) is configured such that each of the p input terminals can be switched to each of the q output terminals.

3. An optoelectronic sensor arrangement in accordance with one of the claims 1 or 2, **characterised in that** a plurality of ASIC reception modules (35, 52) are provided which are linked, preferably in the manner of a daisy chain, to a reception channel control unit (42) for their control.

4. An optoelectronic sensor arrangement in accordance with claim 3, **characterized in that** the evaluation unit and the reception channel unit form a common evaluation and control unit (42).

5. An optoelectronic sensor arrangement in accordance with any one of the claims 1 to 4, **characterised in that** a number M of evaluation signal connections is provided which are preferably combined to form an M-channel data bus (48) and which connect the at least one ASIC reception module (35, 52) for transmitting the output signals of the light reception units (30, 50) to the evaluation unit (42).

6. An optoelectronic sensor arrangement in accordance with any one of the claims 1 to 5, **characterised in that** the individual light receivers are parts of multiple diodes, preferably of double diodes or of 4-quadrant diodes (30).

7. An optoelectronic sensor arrangement in accordance with any one of the claims 1 to 6, **characterised in that** the evaluation unit (42) is not integrated into the at least one ASIC reception module (35, 52).

8. An optoelectronic sensor arrangement in accordance with any one of the claims 1 to 7, **characterised in that** some of the control signal connections are provided in one or more ASIC transmission modules (86), with a plurality of control signal connections preferably sharing one ASIC transmission module (86).

9. An optoelectronic sensor arrangement in accordance with claim 8, **characterised in that** the light transmission elements (80) are not integrated into the one ASIC transmission module or into the plurality of ASIC transmission modules (86).

10. An optoelectronic sensor arrangement in accordance with one of the claims 8 or 9, **characterised by** at least one transmission driver end stage, preferably by L transmission driver end stages (82), for controlling the light transmission element (80), with the at least one transmission driver end stage (82) not being integrated into the ASIC transmission module (86).

11. An optoelectronic sensor arrangement in accordance with any one of the claims 8 to 10, **characterised in that** a plurality of ASIC transmission modules (80) are provided which are linked, preferably in the manner of a daisy chain, to a transmission control unit for their control.

12. An optoelectronic sensor arrangement in accordance with claim 11, to the extent that it is dependent directly or indirectly on claim 4, **characterised in that** the transmission control unit is integrated into a common evaluation and control unit (42).

13. An optoelectronic sensor arrangement in accordance with any one of the claims 8 to 12, **characterised in that** a respective at least one ASIC reception module and a respective at least one ASIC transmission module are integrated into an ASIC combination module such that the ASIC combination module can be used both as an ASIC reception module and as an ASIC transmission module.

14. An optoelectronic sensor arrangement in accordance with claim 13, **characterised in that** some of the structure of the at least one ASIC combination module, in particular a configuration interface, can be used both for the output signal connection and for the control signal connection.

15. An optoelectronic sensor arrangement in accordance with claim 12 and one of the claims 13 or 14, **characterised in that** the common evaluation and control unit (42) is configured such that the at least one ASIC combination module can be controlled simultaneously or alternatively as an ASIC reception module and as an ASIC transmission module.

16. Use of an ASIC module as an ASIC reception module (35, 52) in an optoelectronic sensor arrangement in accordance with any one of
the claims 1 to 7 or as an ASIC transmission module (86) in an optoelectronic sensor arrangement in accordance with any one of the claims 8 to 12 or as an ASIC combination module for use in an optoelectronic sensor arrangement in accordance with any one of the claims 13 to 15.

## Revendications

1. Agencement capteur optoélectronique, comprenant
- un nombre L d'éléments émetteurs de lumière (14, 80) pour émettre des signaux lumineux (18) dans une zone surveillée, tel que L ≥ 1,
- une unité de pilotage (16) pour piloter les éléments émetteurs de lumière (14, 80) via des liaisons signalétiques de pilotage,
- un nombre N d'éléments récepteurs de lumière (20, 30, 50) pour recevoir les signaux lumineux émis par les L éléments émetteurs de lumière (14, 80), tel que N > 1,
- des liaisons signalétiques de sortie (32) connectées au récepteur de lumière pour délivrer les signaux de sortie des récepteurs de lumière, et
- une unité d'évaluation (32, 42) pour engendrer un signal de constatation d'objet en fonction des signaux de sortie des récepteurs de lumière (20, 30, 50),
**caractérisé par**
au moins un composant récepteur ASIC (35, 52) dont les bornes de sortie sont accouplées à au moins un bus de données analogique et dans lequel sont intégrées au moins des parties des liaisons signalétiques de sortie (32), et qui comprend p bornes d'entrée pour la connexion des récepteurs de lumière (30) et q bornes de sortie, tel que "p > 1 et q > 1" ou "p = 1 et q > 1", ou "p > 1 et q = 1", et
dans lequel ledit au moins un composant récepteur ASIC (35, 52) dispose d'une unité de commutation (38) avec laquelle chacune des p bornes d'entrée peut être connectée à l'une au moins des q bornes de sortie, et dans lequel la somme des produits du nombre des composants récepteurs ASIC par le nombre respectif p des bornes d'entrée est supérieure ou égale à N, et dans lequel les p bornes d'entrée dudit au moins un composant récepteur ASIC (35, 52) disposent d'amplificateurs (36) intégrés sur ledit au moins un composant récepteur ASIC (35, 52), qui sont agencés avant l'unité de commutation (38).

2. Agencement capteur optoélectronique selon la revendication 1, **caractérisé en ce que** l'unité de commutation (38) est conçue de telle façon que chacune des p bornes d'entrée peut être commutée vers chacune des q bornes de sortie.

3. Agencement capteur optoélectronique selon l'une des revendications 1 ou 2, **caractérisé en ce qu'**il est prévu plusieurs composants récepteurs ASIC (35, 52) qui sont chaînés, pour leur pilotage, avec une unité de commande de canal récepteur (42), de préférence à la manière d'une chaîne en marguerite.

4. Agencement capteur optoélectronique selon la revendication 3, **caractérisé en ce que** l'unité d'évaluation et l'unité de commande de canal récepteur forment une unité commune d'évaluation et de commande (42).

5. Agencement capteur optoélectronique selon l'une des revendications 1 à 4, **caractérisé en ce qu'**il est prévu un nombre M de liaisons signalétiques d'évaluation, de préférence regroupées en un bus de données à M canaux (48), qui connectent ledit au moins un composant récepteur ASIC (35, 52) à l'unité d'évaluation (42) pour la transmission des signaux de sortie des unités réceptrices de lumière (30, 50).

6. Agencement capteur optoélectronique selon l'une des revendications 1 à 5, **caractérisé en ce que** les récepteurs de lumière individuels font partie de diodes multiples, de préférence de diodes doubles ou de diodes à 4 quadrants (30).

7. Agencement capteur optoélectronique selon l'une des revendications 1 à 6, **caractérisé en ce que** l'unité d'évaluation (42) n'est pas intégrée dans ledit au moins un composant récepteur ASIC (35, 52).

8. Agencement capteur optoélectronique selon l'une des revendications 1 à 7, **caractérisé en ce que** des parties des connexions signalétiques de pilotage sont prévues dans un ou plusieurs composants émetteurs ASIC (86), et dans lequel plusieurs connexions signalétiques de pilotage partagent de préférence un composant émetteur ASIC (86).

9. Agencement capteur optoélectronique selon la revendication 8, **caractérisé en ce que** les éléments émetteurs de lumière (80) ne sont pas intégrés dans ledit composant émetteur ASIC ou respectivement lesdits plusieurs composants émetteurs ASIC (80).

10. Agencement capteur optoélectronique selon l'une des revendications 8 ou 9, **caractérisé par** au moins un étage final émetteur de puissance, de préférence L étages finaux émetteurs de puissance (82), pour piloter les éléments émetteurs de lumière (80), dans lequel ledit au moins un étage final émetteur de puissance (82) n'est pas intégré dans le composant émetteur ASIC (86).

11. Agencement capteur optoélectronique selon l'une des revendications 8 à 10, **caractérisé en ce qu'**il est prévu plusieurs composants émetteurs ASIC (86) qui sont chaînés avec une unité de commande d'émission, pour leur pilotage, de préférence à la manière d'une chaîne en marguerite.

12. Agencement capteur optoélectronique selon la revendication 11, prise directement ou indirectement en dépendance de la revendication 4, **caractérisé en ce que** l'unité de commande d'émission est intégrée dans l'unité d'évaluation et de commande commune (42).

13. Agencement capteur optoélectronique selon l'une des revendications 8 à 12, **caractérisé en ce qu'**au moins un composant récepteur ASIC respectif et au moins un composant émetteur ASIC respectif sont intégrés dans un composant combiné ASIC de telle façon que le composant combiné ASIC est utilisable aussi bien à titre de composant récepteur ASIC qu'à titre de composant émetteur ASIC.

14. Agencement capteur optoélectronique selon la revendication 13, **caractérisé en ce que** des parties de la structure dudit au moins un composant combiné ASIC, en particulier une interface de configuration, sont utilisables aussi bien pour la liaison signalétique de sortie que pour la liaison signalétique de pilotage.

15. Agencement capteur optoélectronique selon la revendication 12 et l'une des revendications 13 ou 14, **caractérisé en ce que** l'unité d'évaluation et de commande commune (42) est configurée de telle façon que ledit au moins un composant combiné ASIC peut être piloté soit simultanément soit alternativement à titre de composant récepteur ASIC et à titre de composant émetteur ASIC

16. Utilisation d'un composant ASIC à titre de composant récepteur ASIC (35, 52) dans un agencement capteur optoélectronique selon l'une des revendications 1 à 7, ou bien à titre de composant émetteur ASIC (86) dans un agencement capteur optoélectronique selon l'une des revendications 8 à 12, ou encore à titre de composant combiné ASIC pour l'utilisation dans un agencement capteur optoélectronique selon l'une des revendications 13 à 15.
